# EUROPEAN PATENT SPECIFICATION

(11) **EP 3 471 380 B1**
(45) Date of publication and mention of the grant of the patent: **29.04.2020**
(21) Application number: 17196227.7
(22) Date of filing: 12.10.2017
(51) Int. Cl.: H04L 29/12, H04L 29/06

(54) **METHOD AND APPARATUSES FOR MULTI-IDENTITY SERVICE BASED ON REGISTRATION OF SHARED IDENTITIES**
VERFAHREN UND VORRICHTUNGEN ZUR BEREITSTELLUNG EINES MULTI-IDENTITÄTS-DIENSTES INNERHALB EINES KOMMUNIKATIONSNETZWERKS
MÉTHODE ET APPAREILS PERMETTANT DE FOURNIR UN SERVICE MULTI-IDENTITÉ AU SEIN D'UN RÉSEAU DE COMMUNICATION

(43) Date of publication of application: 17.04.2019
(73) Proprietor: Deutsche Telekom AG, 53113 Bonn (DE)
(72) Inventor: Thomas, Dennert, 53844 Troisdorf (DE); Habermann, Steffen, 57635 Fiersbach (DE); Thelen, Jörg, 53604 Bad Honnef (DE); Bremer, Rainer, 53757 Sankt Augustin (DE)
(74) Representative: Vossius & Partner Patentanwälte Rechtsanwälte mbB

(56) References cited:
- US-A1- 2007 121 622
- US-A1- 2009 098 853
- US-A1- 2012 166 652
- "3rd Generation Partnership Project; Technical Specification Group Core Network and Terminals; IP Multimedia (IM) session handling; IM call model; Stage 2 (Release 14)", 3GPP STANDARD ; TECHNICAL SPECIFICATION ; 3GPP TS 23.218, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V14.0.0, 17 March 2017 (2017-03-17), pages 1-73, XP051290575, [retrieved on 2017-03-17]
- "3rd Generation Partnership Project; Technical Specification Group Services and System Aspects; IP Multimedia Subsystem (IMS); Stage 2 (Release 15)", 3GPP STANDARD ; TECHNICAL SPECIFICATION ; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 18 September 2017 (2017-09-18), pages 1-328, XP051336966, [retrieved on 2017-09-18]

## Description

### TECHNICAL FIELD

In general, the invention relates to techniques for providing a multi-identity service within a communication network. More specifically, the invention relates to an application server, in particular a session initiation protocol (SIP) application server for providing the multi-identity (ID) service. The invention further relates to user terminals and methods for providing the multi-identity service.

### BACKGROUND

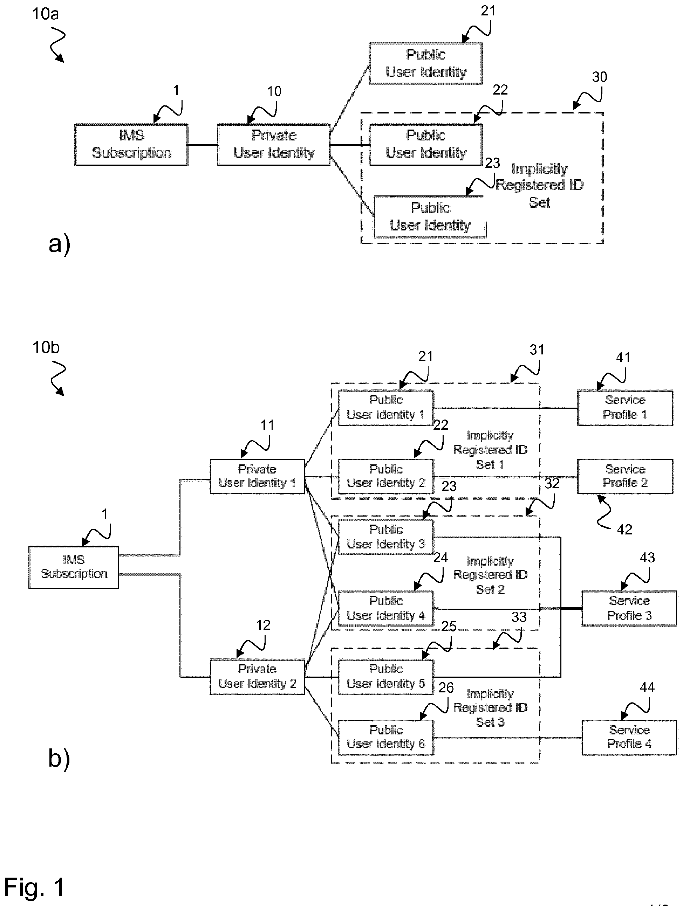

The 3GPP IP Multimedia Subsystem (IMS) standard specifies the concept of an "Implicit Registration Set" for registering more than one public identity (IMPU) within one single registration procedure as illustrated in Figures 1a and 1b. This is an extension of the basic SIP standard RFC 3261 requesting a separate registration per identity. The 3GPP IMS standards 24.229, section 5.2.6.3.1 and 24.607, section 4.3.2 require that a public user identity that is used as originating party identity (SIP header P-Preferred-ldentity) must be included in the Implicit Registration Set.

When a user has a set of Public User Identities 21, 22, 23 defined to be implicitly registered via single IMS registration of one of the Public User Identities in that set, it is considered to be an Implicit Registration 30. No single public identity shall be considered as a master to the other Public User Identities. Fig. 1a shows a simple diagram 10a of implicit registration and Public User Identities. Figure 1b shows a similar diagram 10b when multiple Private User Identities 11, 12 are involved. All Public User Identities of an Implicit Registration set 31, 32, 33 must be associated to the same Private User Identities 11, 12. When one of the Public User Identities, e.g. 21, within the set is registered, all Public User Identities 21, 22 associated with the implicit registration set 31 are registered at the same time. Public user identities belonging to an implicit registration set may point to different service profiles 41, 42, 43, 44; or some of these Public User Identities may point to the same service profile. When a Public User Identity belongs to an implicit registration set, it cannot be registered or deregistered individually without the Public User Identity being removed from the implicit registration list.

The 3GPP IMS data model specifies that "*All Public User Identities of an Implicit Registration set must be associated to the same Private User Identities."* (3GPP 23.228, section 5.2.1a.0). This is reflected by the S-CSCF registration procedure specified in 3GPP TS 24.229, section 5.4.1.2.2E.

Current available communication products allow the usage of two different mobile telephone numbers that belong to two independent contracts with one single SIM. Such products, in principle, follow the concept of a single registration per identity, i.e. per mobile telephone number. Some communication products that are based on SIP and IMS allow using several public identities (e.g. telephone numbers) that belong to different contracts under one registration. To circumvent the restrictions that are imposed by the IMS standard the signaling of the number that shall be applied as originating number and as terminating number, respectively, is separated from the signaling for call set-up.

A separate registration per identity as required by the basic SIP standard RFC 3261 can be compared with the usage of two SIM. If user B wants to share his own number with another user A the device of user A must somehow register with the identity of user B, e.g. by using a SIM of user B. With a Dual-SIM terminal it is possible to activate the SIM that shall be used for initiating or receiving calls. Some communication products combine two SIM that are associated with two different contracts in one physical module. One drawback of such products is that only one identity can be active at a time. Particularly, for receiving calls on a specific number the user must activate the profile for that number manually.

The 3GPP IMS data model specified for the Implicit Registration Set has the following limitation: One Public Identity can only belong to one and only one IMS subscription and thus to one user. It is neither possible today that
- IMS Subscription A contains the Public Identities 11 and 12 and that IMS Subscription B contains only the Public Identity 11 (a-symmetric) nor that
- IMS Subscription A contains the public identities 11 and 12 and IMS Subscription B contains the public identities 11 and 12 (symmetric).

US2007121622 A1 relates to processing Session Initiation Protocol (SIP) requests in an IMS network when an Application Server (AS) is taken as a Back-to-Back User Agent (B2BUA).

### SUMMARY OF THE INVENTION

It is an object of the invention to provide a solution for a more flexible design for providing multi-identity service in a communication network that solves the problems mentioned above.

It is a further object of the invention to provide an extension for the above described IMS data model and to provide a concept for a common use of the extended IMS data model for a terminal client and a multi-identity service and particularly to hide the extension from other IMS core nodes that operate according to the IMS standard.

It is a further object of the invention to provide a concept that allows a user to use public identities (e.g. telephone numbers) that are not part of his 3GPP Implicit Registration Set for initiating and receiving calls. The applied tariff plan and service profile depend on the respective public identity (e.g. telephone number) that is used.

The foregoing and other objects are achieved by the subject matter of the independent claims. Further implementation forms are apparent from the dependent claims, the description and the figures.

A basic concept of the disclosure is the utilization of a Multi-Identity service that allows a user A with a contract A to use on a single terminal several public identities (e.g. telephone numbers) that belong to different contracts B, C, ... in addition to the own public identity A. The user's own public identity A is referenced as "native" public identity. Identities B, C, ... that belong to different contracts are referenced as "virtual" public identities. When making an outgoing call user A can select via the user interface of his terminal one of these public identities (e.g. telephone numbers) as the originating party identity. The call will be handled according to the service profile (subscription) of the selected originating party identity. An incoming call that is received on the terminal of user A may be directed to any of the public identities (e.g. telephone numbers) A, B, C, ... that user A is allowed to use. The public identities (e.g. telephone numbers) A, B, C, ... that was specified as call destination by the initiator of the call can be displayed as the called identity on the terminal of user A.

Aspects of the disclosure relate to the correlation of information that is transferred in SIP during session establishment with public identities (e.g. telephone numbers) that are maintained in the user profile. Each native or virtual public identity (e.g. telephone number) that can be used by a user A is linked in the profile of user A to an index I. The profile of user A is maintained in the network database. The network database for the multi-identity handling may be realized as a function of the HSS or in a different way. For using the Multi-identity service a specific application is required on the user terminal that is synchronized with the association of public identities (e.g. telephone numbers) and corresponding indexes that are stored in the network database.

Standard SIP signaling for session set-up may be applied for indicating a public identity that was specified by the initiator of a call as originating party identity but is not included in the calling user's Implicit Registration Set. The recipient of a call may get indicated via standard SIP signaling for session set-up a public identity that was specified by the initiator of a call as terminating party identity but is not included in the called user's Implicit Registration Set.

The concept disclosed hereinafter circumvents the limitations of 3GPP with respect to the sharing of public user identities (e.g. telephone numbers) amongst several users with individual Implicit Registration Sets by applying standard SIP procedures according to the 3GPP specifications for IMS. Particularly, the procedures for registration and session control are not impacted by the solution as presented in this disclosure. The solution according to the disclosure allows flexible sharing of public user identities (e.g. telephone numbers) amongst several users for realizing a variety of different use cases for originating and terminating SIP sessions. The solution allows the usage of several tariff plans and service profiles that are associated with different contracts under one SIP registration with one terminal. The solution further allows the sharing of public user identities (e.g. telephone numbers) in scenarios where a call is originated or terminated in a network that does not support SIP but provides interworking between ISUP/BICC and SIP according to 3GPP TS 29.163.

The following use cases are supported by the disclosure:
Use Case A: User B allows user A to initiate calls under the public identity (e.g. telephone number) of user B. The tariff plan and service profile according to the contract of user B are applied if user A uses the public identity (e.g. telephone number) B as the originating party identity. The public identity (e.g. telephone number) B is indicated as calling party identity on the terminal were the call is received. Vice versa user A may or may not allow user B to initiate calls under the public identity (e.g. telephone number) A.
Use Case B: User B shares his public identity (e.g. telephone number) with a user A for the purpose that both users, B and A receive an incoming call in their terminals when a call is terminated towards the public identity (e.g. telephone number) B. For session termination the service profile associated with the public identity (e.g. telephone number) B takes effect. The public identity (e.g. telephone number) B is indicated on the terminal of user A as the called identity for the incoming call. Vice versa user B may or may not be alerted on his terminal when a call is terminated towards the public identity (e.g. telephone number) A.
Use Case C: User B shares his public identity (e.g. telephone number) with a user A for the purpose that both users, A and B can act as box owners for accessing the voicemail box of user B. Vice versa, user B may or may not have granted access to the voicemail box of user A.
Use Case D: Several users A, B, C, ... having an individual contract each may share a public identity (e.g. telephone number) Z that belongs to a separate contract with a tariff plan and service profile. The users A, B, C, ... can be allowed to initiate and/or receive calls under the public identity (e.g. telephone number) Z were the tariff plan and service profile associated to the public identity (e.g. telephone number) Z are applied. The public identity (e.g. telephone number) Z is used for identifying the originating party for outgoing calls and the called party for incoming calls on the terminal(s) were the call is received. The users A, B, C, ... can act as box owners for accessing the voicemail box that belongs to the public identity (e.g. telephone number) Z.

According to a first aspect the invention relates to an application server, in particular a session initiation protocol (SIP) application server for providing a multi-identity (ID) service within a communication network, in particular an IP multimedia subsystem (IMS), the application server comprising a processor which is configured to: receive an originating request message, in particular a SIP invite message, from a user terminal, the originating request message comprising a destination public user ID, a service ID and an index; select a multi-identity service based on the service ID; determine, based on the multi-identity service, a selected originating public user ID based on the index (I); and transmit a modified originating request message, in particular a modified SIP invite message, to the communication network, comprising the selected originating public user ID.

Such an application server provides a flexible design for providing multi-identity service in a communication network. The application server allows a user to use public identities (e.g. telephone numbers) that are not part of his 3GPP Implicit Registration Set for initiating and receiving calls. The applied tariff plan and service profile depend on the respective public identity (e.g. telephone number) that is used.

The application server allows to use a Multi-Identity service that allows a user A with a contract A to use on a single terminal several public identities (e.g. telephone numbers) that belong to different contracts B, C, ... in addition to the own public identity A. When making an outgoing call user A can select via the user interface of his terminal one of these public identities (e.g. telephone numbers) as the originating party identity. The call will be handled according to the service profile (subscription) of the selected originating party identity. An incoming call that is received on the terminal of user A may be directed to any of the public identities (e.g. telephone numbers) A, B, C, ... that user A is allowed to use. The public identities (e.g. telephone numbers) A, B, C, ... that was specified as call destination by the initiator of the call can be displayed as the called identity on the terminal of user A.

In an implementation form of the application server, the processor is configured to generate the modified originating request message based on removing the service ID and the index from the originating request message.

This provides the advantage that the service ID and the index can be used as additional parameters between the user terminal and the application server for providing information to the application server that will be removed by the application server before being forwarded to the IMS core network. Hence, existing SIP messages can be used that are extended between user terminal and application server by the service ID and the index.

In an implementation form of the application server, the processor is configured to generate the modified originating request message based on shifting the service ID, the index and the destination public user ID to a history section of the modified originating request message.

This provides the advantage that standard SIP signaling can be applied also for transporting the service ID and the index.

In an implementation form of the application server, the originating request message comprises a header field, in particular a P-Assertedjdentity header and/or a From header, including a native public user ID of the user terminal.

This provides the advantage that the originating request message is able to pass the P-CSCF that checks if the native public user ID of the user terminal is included in the origination request message.

In an implementation form of the application server, the processor is configured to replace the native public user ID in the header field with the selected originating public user ID.

This provides the advantage that the selection of the originating public user ID by the user will be transported to the called party and can be displayed at a display of the called party. Hence the called party can see on which public ID, e.g. telephone number the user is preferable reachable.

In an implementation form of the application server, the processor is configured to retrieve the selected originating public user ID from a network database, in particular from a home subscriber server (HSS), based on the index.

This provides the advantage that the application server can correlate the network database with the index to validate the selected originating public user ID as selected by the user. Hence, only validated selected originating public user IDs are transported by the network. This improves network security.

The application server determines the selected originating public ID via the index (as described in the paragraph above) and this information is a proprietary extension of the user profile that is not part of the Implicit Registration Set provided to the IMS Core S-CSCF.

In an implementation form of the application server, the modified originating request message indicates a session establishment originating from a user terminal associated with the selected originating public user ID.

This provides the advantage that the modified originating request can efficiently transport information of the calling user terminal to the called party.

In an implementation form of the application server, the processor is configured to: receive a terminating request message, in particular a SIP invite message, from the communication network, the terminating request message comprising a destination public user ID; retrieve profile data associated with the destination public user ID, wherein the profile data indicates at least one virtual public user ID; and route the terminating request message to a user terminal associated with the destination public user ID and to a user terminal associated with the at least one virtual public user ID.

This provides the advantage that a call can be routed to multiple user terminals according to the multi-identity service.

According to a second aspect, the invention relates to a user terminal for providing a multi-identity (ID) service within a communication network, in particular an IP multimedia subsystem (IMS), the user terminal comprising: a user interface configured to receive a user input comprising a destination public user ID and a selected originating public user ID; and a network interface, configured to transmit an originating request message, in particular a SIP invite message, to a communication network, wherein the originating request message comprises the destination public user ID, a service ID and an index; and a processor running a multi-identity (ID) service application, configured to determine the index and the service ID based on user profile information. The user terminal may download the user profile including the virtual identities from the network. This information enables the user terminal to initiate the originating request message by using the appropriate index.

Such a user terminal allows to use a Multi-Identity service that allows a user A with a contract A to use on a single user terminal several public identities (e.g. telephone numbers) that belong to different contracts B, C, ... in addition to the own public identity A. When making an outgoing call user A can select via the user interface of his terminal one of these public identities (e.g. telephone numbers) as the originating party identity. The call will be handled according to the service profile (subscription) of the selected originating party identity. An incoming call that is received on the user terminal of user A may be directed to any of the public identities (e.g. telephone numbers) A, B, C, ... that user A is allowed to use. The public identities (e.g. telephone numbers) A, B, C, ... that were specified as call destination by the initiator of the call can be displayed as the called identity on the user terminal of user A.

In an implementation form of the user terminal, the processor running the multi-identity (ID) service application is configured to receive information about the user profile from the communication network.

This provides the advantage that the multi-identity service can efficiently resolve the information about the user profile of the calling party and display essential parameters on the display.

According to a third aspect, the invention relates to a method for initiating an originating session for a multi-identity (ID) service within a communication network in particular an IP multimedia subsystem (IMS), the method comprising: receiving an originating request message, in particular a SIP invite message, from a user terminal, the originating request message comprising a destination public ID, a service ID and an index; selecting a multi-identity service based on the service ID; determining, based on the multi-identity service, a selected originating public user ID based on the index; and transmitting a modified originating request message, in particular a modified SIP invite message, to the communication network, comprising the selected originating public user ID.

Such a method provides a flexible design for providing multi-identity service in a communication network. The method allows a user to use public identities (e.g. telephone numbers) that are not part of his 3GPP Implicit Registration Set for initiating and receiving calls. The method allows to use a Multi-Identity service that allows a user A with a contract A to use on a single terminal several public identities (e.g. telephone numbers) that belong to different contracts B, C, ... in addition to the own public identity A.

According to a fourth aspect, the invention relates to a method for routing a terminating session for a multi-identity (ID) service within a communication network in particular an IP multimedia subsystem (IMS), the method comprising: receiving a terminating request message, in particular a SIP invite message, from the communication network, the terminating request message comprising a destination public user ID; retrieving profile data associated with the destination public user ID, wherein the profile data indicates at least one virtual public user ID; and routing the terminating request message to a user terminal associated with the destination public user ID and to a user terminal associated with the at least one virtual public user ID.

Such a method provides a flexible design for providing multi-identity service in a communication network. The method allows a user to initiate a communication request from a circuit-switched network and receive terminating requests to the circuit-switched network. The method can efficiently route or convert messages between a CS-domain and a SIP/IMS domain of a communication network. By using method, the same user terminal functions can be used for call establishment in SIP/IMS network domain and CS network domain.

According to a sixth aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1a shows a block diagram 10a illustrating the concept of implicit registration and Public User Identities according to the current 3GPP IMS standard;
Figure 1b shows a block diagram 10b illustrating the concept of implicit registration and Public User IDs according to the current 3GPP IMS standard when multiple Private User IDs 11, 12 are involved;
Figure 1c shows a block diagram 10c illustrating the new concept of IMS data model extension according to the disclosure;
Fig. 2 shows a block diagram illustrating the scenario 100 of Originating SIP session with virtual originating identity in a communication network according to the disclosure;
Fig. 3 shows a block diagram illustrating the scenario 200 of Originating session with virtual originating identity initiated in a legacy network not using SIP/IMS according to the disclosure;
Fig. 4 shows a block diagram illustrating the scenario 300 of Terminating session towards a virtual public identity according to the disclosure;
Fig. 5 shows a block diagram illustrating an exemplary application server 500 according to the disclosure;
Fig. 6 shows a block diagram illustrating an exemplary method 700 for initiating an originating session for a multi-identity (ID) service within a communication network according to the disclosure; and
Fig. 7 shows a block diagram illustrating an exemplary method 800 for routing a terminating session for a multi-identity (ID) service within a communication network according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

Fig. 1a shows a block diagram 10a illustrating the concept of implicit registration and Public User Identities according to the current 3GPP IMS standard. IMS subscription 1 can be performed for a private user identity 10 to which a set of public user entities are assigned to. Two public user entities 22, 23 are assigned to an implicit registration set 30 while one public user entity 21 is not assigned to the implicit registration set 30.

Figure 1b shows a block diagram 10b illustrating the concept of implicit registration and Public User IDs according to the current 3GPP IMS standard when multiple Private User IDs 11, 12 are involved. All Public User Identities of an Implicit Registration set 31, 32, 33 must be associated to the same Private User Identities 11, 12. When one of the Public User Identities, e.g. 21, within the set is registered, all Public User Identities 21, 22 associated with the implicit registration set 31 are registered at the same time. Public user identities belonging to an implicit registration set may point to different service profiles 41, 42, 43, 44; or some of these Public User Identities may point to the same service profile. When a Public User Identity belongs to an implicit registration set, it cannot be registered or deregistered individually without the Public User Identity being removed from the implicit registration list. According to 3GPP IMS specification all Public User Identities of an Implicit Registration set must be associated to the same Private User Identities.

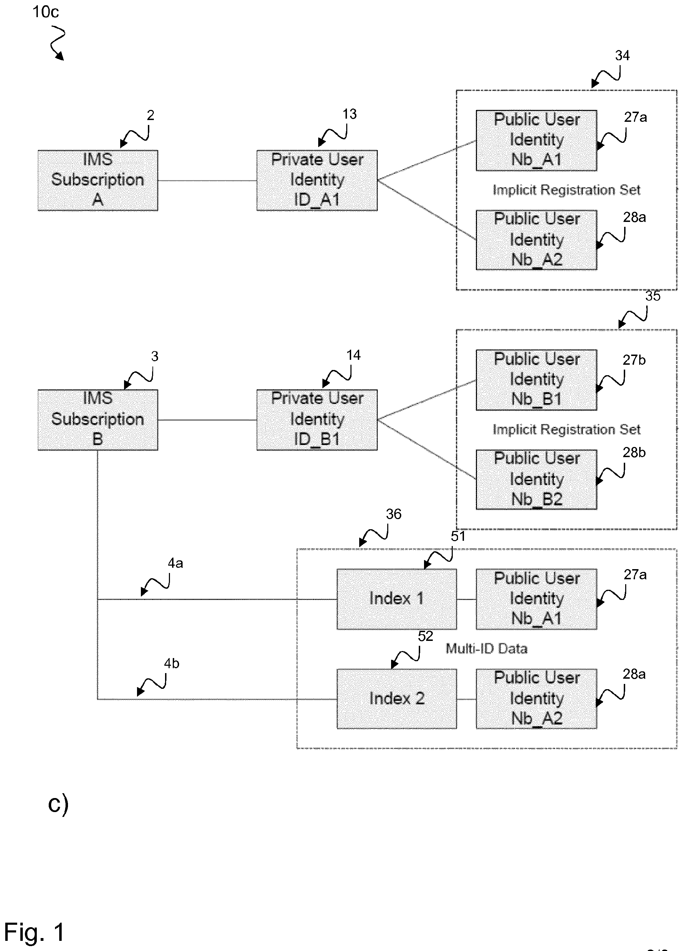

Figure 1c shows a block diagram illustrating the new concept of IMS data model extension 10c according to the disclosure.

In IMS Subscription (IMS Subscription A), 2 of Private User Identity ID_A1, 13, an implicit registration set 34 is formed for that Private User Identity ID_A1, 13 which includes a first Public User Identity Nb_A1, 27a and a second Public User Identity Nb_A2, 28a. The implicit registration set 34 includes information provided to IMS-core (S-CSCF, P-CSCF) according to 3GPP standards.

In IMS Subscription (IMS Subscription B), 3 of Private User Identity ID_B1, 14, an implicit registration set 35 is formed for that Private User Identity ID_B1, 14 which includes a first Public User Identity Nb_B1, 27b and a second Public User Identity Nb_B2, 28b. The implicit registration set 35 includes information provided to IMS-core (S-CSCF, P-CSCF) according to 3GPP standards.

The IMS data model for IMS Subscription (IMS Subscription B), 3 is extended by (or linked 4a, 4b with) multi-identity data 36 which includes Public User Identity Nb_A1, 27a assigned to Index 1,51 and Public User Identity Nb_A2, 28a assigned to Index 2, 52. That is, the extension includes public user identities 27a, 28a that were used by another subscription, that is, IMS Subscription A, 2. The multi-ID data 36 thus includes multi-ID data model extensions provided to Client and Multi-ID application, which are not visible for IMS-Core (i.e. S-CSCF, F-CSCF).

Figure 1c thus illustrates extension of the IMS data model by a link 4a, 4b which allows to assign a public identity 27a, 28a to an IMS subscription 3 by using an index 51, 52, wherein this public identity 27a, 28a is actually assigned to another IMS subscription 2.

This extension of the data model 10c is used by the client (terminal) and the multi-ID service, whereas it is not visible to the IMS core nodes (S-CSCF, P-CSCF) implemented according to the 3GPP standard.

According to this concept illustrated in Fig. 1c, an extension for the IMS data model is provided. This extension can be commonly used by a terminal client and a multi-identity service. The extension is hidden from other IMS core nodes that operate according to the IMS standard.

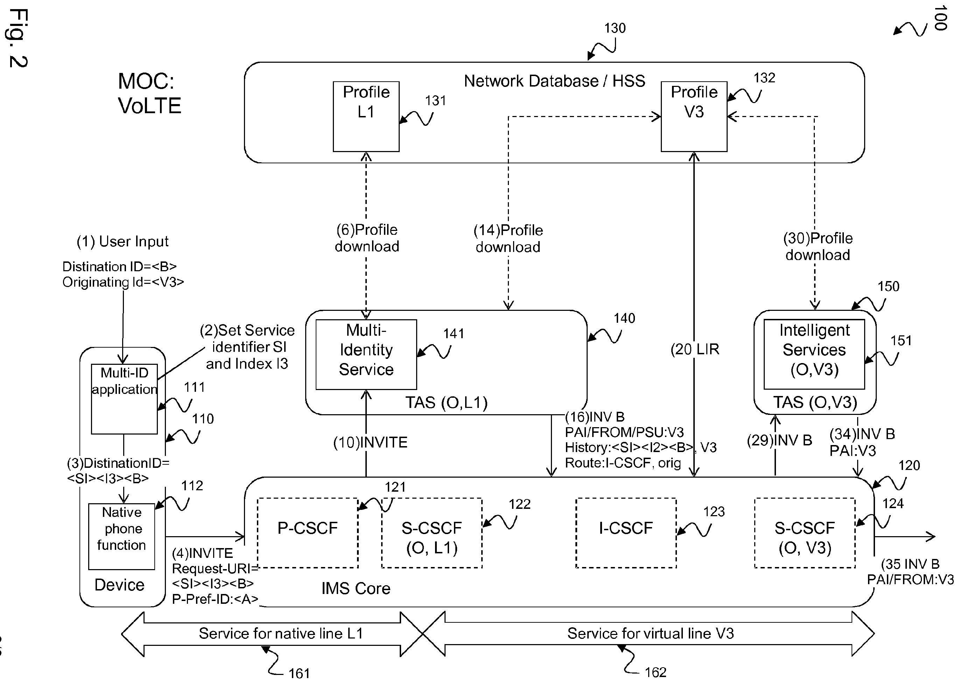

Fig. 2 shows a block diagram illustrating the scenario 100 of Originating SIP session with virtual originating identity in a communication network according to the disclosure.

The scenario 100 is based on the IMS data model extension 10c as described above with respect to Fig. 1c. A terminal 110 that initiates the originating SIP session has access to the user profile of the called party including the extended IMS data model 10c (indices pointing to virtual public identities) prior to call set-up. The terminal 110 knows this information how to derive the index for the calling information from the virtual identity as desired by the user. The index for the calling information is then sent to the network as described hereinafter.

Both IMS core (i.e. S-CSCF, P-CSCF) and MSC 220) are used unchanged according to the disclosed concept. The idea as described hereinafter is that new algorithms in the terminal client 110, the multi-ID application 111, multi-ID service 141 and an extension of the central IMS data model 10c, which is only used by them, provide the multi-ID service without extensive changes to standardized IMS core or GSM core components 120.

The communication network or system includes an IMS core network 120 with the network nodes P-CSCF 121, S-CSCF (O, L1) 122, I-CSCF 123 and S_CSCF (O, V3) 124. The communication network includes an application server TAS(O, L1) 140 with a multi-identity service 141. The communication network includes an application server TAS(O, V3) 150 with Intelligent Services 151. Both application servers 140, 150 may be implemented as separate entities or as a single entity. The communication network includes a network database 130, e.g. a HSS (Home Subscription Server) with a profile L1 131 and a profile V3 132. The communication network further includes a user terminal or user device 110 with a user interface for receiving a user input (1), a multi-ID application 111 and a module for native phone function 112.

When initiating an outgoing call, user A selects on the terminal 110 user interface the destination public identity (e.g. telephone number) B and the originating public identity (e.g. telephone number). The originating public identity (e.g. telephone number) may be the native public identity A that belongs to the contract of user A or a virtual public identity V, e.g. V3 shown in Fig. 2, that belongs to a different contract. The Multi-ID application 111 on the user terminal 110 determines the index I, e.g. 13 shown in Fig. 2, that corresponds to the selected originating identity A or V in the user profile data, incl. the Multi-ID extensions within the user profile data which have been downloaded from the network in advance, plus a Service identifier S1 for the Multi-identity service. The further description assumes that the originating user A did select the virtual public identity V3 that correlates with Index 13.

The Service identifier S1 and the Index 13 are passed to native phone function 112 for SIP/IMS session control.

The distinct terminal function and the exact procedure for generating the initial INVITE (4) are not relevant for the disclosure. For the disclosure, it is also not relevant how the Service identifier S1 and the Index I are transported in SIP protocol elements. For example, the Service identifier S1 and the Index I may be included in appropriate SIP headers. Another option is the inclusion of the Service identifier S1 and the Index I in the request-URI together with the destination identity B. A request-URI that includes the Service identifier S1 and/or the Index I together with the destination identity B is not restricted to a specific format. The request-URI may be constructed as sip-URI or as tel-URI. A request-URI that is represented in the sip-URI scheme may be a sip-URI representation of a telephone number or may have a different format.

The originating public identity (SIP P-Preferred-Identity) applied by the user terminal 110 is the native public identity A of user A. This is necessary because the IMS network (P-CSCF) screens the originating public identity (SIP P-Preferred-ldentity) that is used for initiating a call. A public identity that is not natively owned by user A, i.e. a public identity that is not part of the implicit registration set of user A would not be accepted.

The originating session set-up 100 is performed by the IMS core 120 as specified by the 3GPP procedures. P-CSCF and S-CSCF use the information that is available from the preceding registration of the originating user A and from retrieval of user profile information for user A from the HSS 130, if necessary.

The S-CSCF triggers the SIP application server 140 that serves the originating user A via the ISC interface as specified by the 3GPP procedures. The Service identifier S1 is used for selecting the Multi-identity service 141 that runs on the SIP application server 140. The Multi-identity service 141 correlates the Index 13 with the virtual public identity V3 that was selected by user A as originating party identity. This correlation is based on user profile data of user A. For the disclosure, it is not relevant how these user profile data were obtained. Possible options are a profile download when user A did register or independently of a registration procedure or a real-time access to a database, e.g. if the SIP Multi-identity service 141 is stateless.

The Multi-identity service 141 modifies the initial INVITE (10) as follows:
- Removal of Service identifier SI and Index I from the SIP protocol elements where they were included by the originating terminal 110.
- Replacement of the contents of the following SIP headers with the public identity V3 that was identified by the Index 13: P-Asserted-Identity, From.
- Creation of a History-Info header that includes a concatenation of Service identifier SI, Index 13 and destination public identity B with the 1^{st} available index and the originating public identity that correlates with the Service identifier with the next index in sequence.

In the next step the SIP application server 140 is triggered for serving an originating session that was initiated with the public identity V3. The public identity V3 may have an existing IMS registration or may not be registered in IMS. For the disclosure, it is not relevant how the triggering of the SIP application server 140 is realized. As a possible option the SIP application server 140 where the Multi-identity service 141 is hosted may act as originating UA as specified by 3GPP TS 24,229, section 5.7.3: The INVITE with the "orig" parameter included in the topmost route header is sent to an I-CSCF. The I-CSCF performs the originating procedures for requests containing the "orig" parameter as specified by 3GPP TS 24,229, section 5.3.2.1A. The 3GPP IMS procedures are applied for selecting the S-CSCF and for triggering the SIP application server 140 where the public identity V3 is served for the originating session.

The further session handling is performed as specified by the 3GPP IMS standards in the same way as if the native owner of the public identity V3 did initiate a session towards the destination identity B.

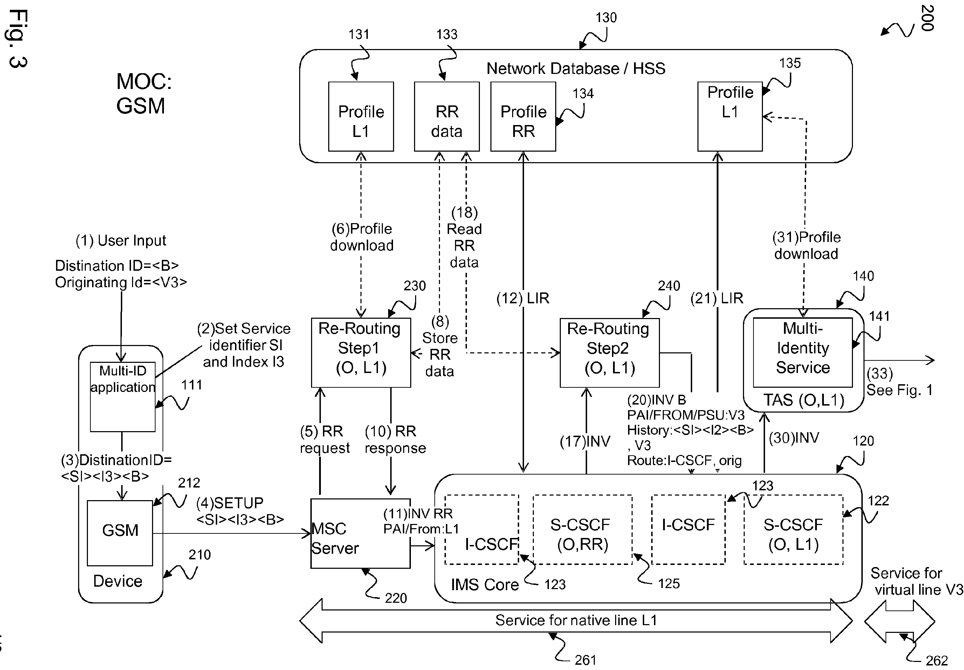

Fig. 3 shows a block diagram illustrating the scenario 300 of Originating session with virtual originating identity initiated in a legacy network not using SIP/IMS according to the disclosure.

In contrast to the scenario 100 depicted in Fig. 2, in the scenario 200 of Fig. 3, the user device 210 is a 2G/3G device with a GSM module 212 that is connectable to a circuit-switched communication network. In the scenario 200 of Fig. 3 an MSC server 220 may connect the GSM module 212 to the communication network. The MSC server 220 receives the SETUP message (4) of the user terminal 210, performs the re-routing (RR) request (5) and response (10) and forwards the SETUP message (4) as an INVITE message (11) to the IMS core network 120 that may correspond to the IMS core network 120 described above with respect to Fig. 2. The INVITE message (11) to the IMS core network 120 may correspond to the INVITE message (4) shown in Fig. 2. A routing server 230, 240 (or re-routing server, respectively) resolves the routing requests (5) from MSC server 220 based on L1 profile data 131 and routing data 133 stored in the network data base / HSS 130.

Under the condition that the session handling is performed by an IMS core 120 and SIP application servers 140 the Multi-identity service 141 can be used also if the Multi-ID application 111 on the terminal 210 interacts with native terminal functions not supporting SIP. Examples are legacy GSM terminals in the 2G/3G network or terminals that can be served in a 2G/3G network as well as in a 4G network. The function of the Multi-ID application 111 on the terminal 210 is the same as for a SIP session (described above with respect to Fig. 2) with the exception that the destination number that is passed to the native terminal function represents a concatenation of Service identifier SI, Index I and destination number B.

The session is handled by a core network 120 supporting Signaling System N° 7 or BICC. The switch that handles the session, e.g. an MSS 220 in a mobile network, must support a SIP interface with an IMS core 120 and must perform the signaling interworking from ISUP/BICC to SIP as specified by 3GPP TS 29.163 for generating the initial INVITE (11) from the information (4) that was provided by the originating terminal 210. The P-Asserted-Identity header and the From header of the initial invite (11) represent the native public identity of the user A who has initiated the session.

The routing towards the IMS domain 120 is triggered by the Service identifier SI that was provided by the terminal 210 in the destination number. For the disclosure, the technical realization of the routing towards the IMS domain 120 is not relevant. One possible option is the triggering of an IN (Intelligent Network) service that provides additional information for routing towards an I-CSCF. Another option is that the service that is triggered by the switch, e.g. an MSS 220 in the mobile network, acts as originating UA as specified by 3GPP TS 24,229, section 5.7.3 and sends an INVITE (11) with the "orig" parameter included in the topmost route header to an I-CSCF 123. The I-CSCF 123 performs the originating procedures for requests containing the "orig" parameter as specified by 3GPP TS 24,229, section 5.3.2.1A. The 3GPP IMS procedures are applied for selecting the S-CSCF 122 and for triggering the SIP application server 140 serving the native public identity A of the user who has initiated the session. Because of the Service identifier SI the Multi-identity service is executed first. The further session handling is performed in the same way as in the case of an originating SIP session as described above with respect to Fig. 2.

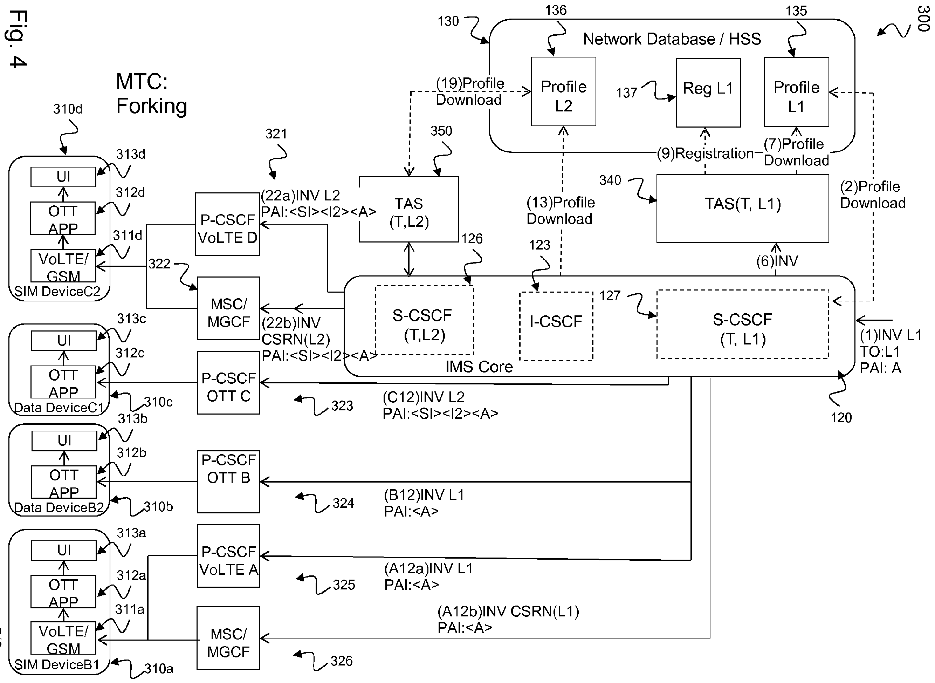

Fig. 4 shows a block diagram illustrating the scenario 300 of terminating session towards a virtual public identity according to the disclosure. Figure 4 shows various variants of terminating sessions for devices 310a, 310b, 310c and 310d. For simplification reasons, the following definitions and abbreviations are applied: calling party is user A with public identity A (not shown in the Figure 4). Called party is User B with terminal B1, 310a and B2, 310b which native public ID is L1. Further called party is User C with terminal C1, 310c and terminal C2, 310d which native public ID is L2.

When party A calls public user ID L1, this corresponds in view of terminals B1 and B2 to their native public ID, while this corresponds in view of terminals C1 and C2 to their virtual public ID (as their native public ID is L2).

The communication network may correspond to the communication networks described above with respect to Figures 2 and 3. It includes the IMS core network 120 with the network nodes I-CSCF 123, S_CSCF (T, L2) 126 and S_CSCF (T, L1) 127. The communication network includes the application server(s) TAS(T, L2) 350 and TAS(T,L1) that may be implemented as a single device or as two separate devices. The communication network includes the network database 130, e.g. a HSS (Home Subscription Server) with profiles L2 136 and L1 135 and L1 registration data 137. The communication network further includes a plurality of user terminals 310a, 310b, 310c, 310d that may be implemented based on VoLTE / GSM modules 311a or based on OTT ("over the top") applications 312a, 312b, e.g. based on iOS APP or Android APP based applications. Each terminal has a user interface 313a, 313b, 313c, 313d for receiving user data.

The virtual public identity V2 in the profile of user B is identical with the native public identity L2 of user C. When a call is terminated towards the native public identity L1 the call shall be received on a terminals C1 and C2 of user C. User C shall get an information that the call was originally addressed to the public identity L1. For the disclosure, it is not relevant whether the call is terminated also on a terminal of user B, for whom the originally called public identity L1 is his native telephony number.

A SIP INVITE (1) where the request-URI and the To header represent the public identity L1 is routed according to the 3GPP IMS standards. This includes the invocation of SIP application servers 340, 350 according to the profile of user C. The disclosure defines additional procedures that are executed by the SIP application server 340, 350 that serves user C for terminating session handling.

The SIP application server 340, 350 that serves user C uses the profile of user C for controlling the session termination towards the terminals of user C according to the 3GPP IMS standards. The profile of user C includes also the virtual public identities (e.g. telephone numbers) that can be used by user C. When handling the terminating session for user C the SIP application server 340, 350 determines all virtual public identities that shall receive calls for user C. The SIP application server triggers an initial INVITE (22a, towards VoLTE device in 4G Radio Network), (respective 22b, in case of termination via MSC to a GSM device in 2/3G Radio Network) not including the "orig" parameter in the topmost route header towards the native identity of user C. The request-URI represents the respective native identity.

For providing the information to user C that the call was originally addressed to the native identity L1 (owned by user B) and is received because user C shares his identity with user B for call termination the Service identifier SI and the Index 12 that correlates with the virtual public identity V2 in the profile of user C must be provided to the terminal of user C in the initial INVITE (22a), (22b).

For the disclosure, it is also not relevant how the Service identifier SI and the Index I are transported in SIP protocol elements of the initial INVITE (22a), (22b). For example, the P-Asserted-Identity header may represent a concatenation of Service identifier SI, Index I2 and the public identity A of the initiator of the call towards C. The resulting string <SI><I2>A would be displayed at the terminal of C. This option is applicable also if the session is terminated via SIP to ISUP/BICC interworking.

A better user experience may be realized with the Multi-identity application 312d, 312c, 312b, 312a running on the terminal were the call is received. In this case the Index I2 can be converted into the virtual public identity V2 that is identical with the native public identity L1 of user B. This allows for the terminal application to indicate to the called user C via the UA the identity L1 as originally called party and the identity of user A as calling party. This option is applicable also if the session is terminated via SIP to ISUP/BICC interworking.

Alternatively, the P-Asserted-ldentity may contain only the public identity A of the initiator of the call towards C. The Service indicator SI and the Index I2 may be included in other appropriate SIP headers. For example, the SIP application server where user C is served for the terminating session may generate a History-Info header with the public identity C. In the case of SIP to ISUP/BICC interworking the History-Info header may be mapped to the Original Called Number or Redirecting Number.

Fig. 4 shows further options to terminate the incoming call addressed to L1 to embedded VoLTE/GSM telephony applications (B1/C2) or APP based OTT applications (B2/C1) of multiple users. Hereby the originally called number L1 is the native telephony number of called user B and the virtual telephony number of user C.

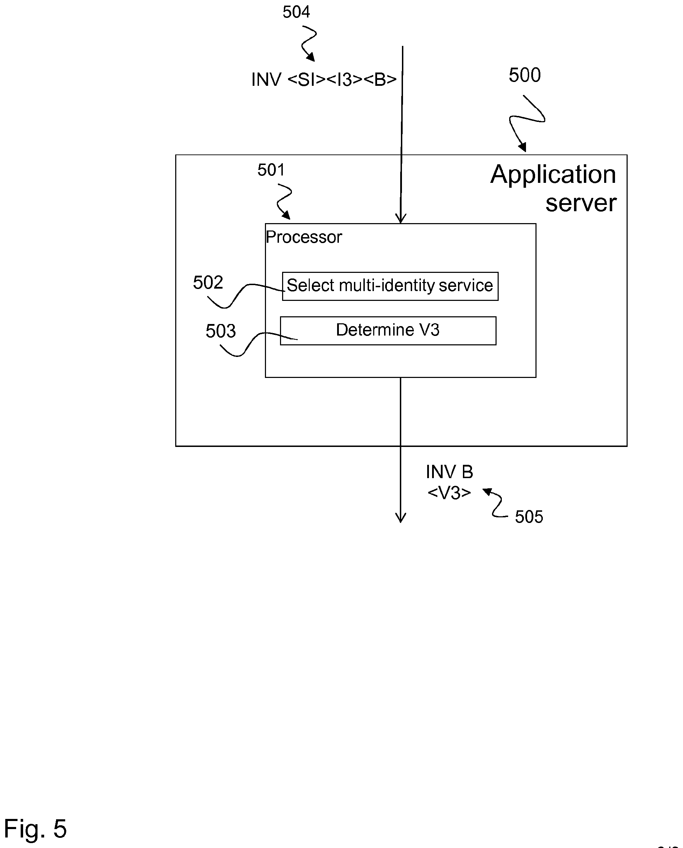

Fig. 5 shows a block diagram illustrating an exemplary application server 500 according to the disclosure. Such an application server 500 may correspond to the SIP application server 140 as described above with respect to Fig. 2 and/or to the SIP application server 150 as described above with respect to Fig. 2.

The application server 500, e.g. session initiation protocol (SIP) application server 140, 150 may be used for providing a multi-identity (ID) service 141 within a communication network, in particular an IP multimedia subsystem (IMS), e.g. as described above with respect to Figures 2 to 4. The application server 500 comprises a processor 501 for performing processing tasks of the application server 500.

The processor 501 is configured to receive an originating request message 504, e.g. a SIP invite message as described above with respect to Figures 2 to 4, from a user terminal 110. The originating request message 504 comprises a destination public user ID <B>, a service ID <SI> and an index <I3>, e.g. as described above with respect to Figures 2 to 4.

The processor 501 is configured to select a multi-identity service 502 based on the service ID <SI>; and to determine 503, based on the multi-identity service <SI>, a selected originating public user ID <V3> based on the index <I3>, e.g. as described above with respect to Figures 2 to 4. The processor 501 is further configured to transmit a modified originating request message 505, in particular a modified SIP invite message, e.g. a modified SIP INVITE message as described above with respect to Figures 2 to 4, to the communication network, comprising the selected originating public user ID <V3>.

The processor 501 may generate the modified originating request message 505 based on removing the service ID <SI> and the index <I3> from the originating request message 504. The processor 501 may generate the modified originating request message 505 based on shifting the service ID <SI>, the index <I3> and the destination public user ID <B> to a history section of the modified originating request message 505, e.g. as described above with respect to Figures 2 to 4.

The originating request message 504 may comprise a header field, in particular a P-Asserted identity header and/or a From header, including a native public user ID <A> of the user terminal 110, e.g. as described above with respect to Figures 2 to 4. The processor 501 may replace the native public user ID <A> in the header field with the selected originating public user ID <V3>.

The processor 501 may retrieve the selected originating public user ID <V3> from a network database 130, in particular from a home subscriber server (HSS), e.g. as described above with respect to Figures 2 to 4, based on the index <I3>. The processor 501 may retrieve the selected originating public user ID <V3> from an implicit registration set 30, 31, 32, 33, e.g. as shown in Figures 1 a and 1b, of the network database 130. The implicit registration set 31, 32, 33 may comprise at least one native public user ID <A> of the user terminal 110 and one or more virtual public user IDs <V3> of the user terminal 110. In contrast to the description of Figures 1a and 1b, the implicit registration set 31, 32, 33 of the network database 130 is asymmetrically structured.

By using an asymmetrically structured implicit registration set, it is possible to have one Implicit Registration Set A with the public identities A and B and another Implicit Registration Set B that includes only public identity B.

The implicit registration set 31, 32, 33 comprises a plurality of public user IDs 21, 22, 23, 24, 25, 26, e.g. as described above with respect to Figures 1a and 1b. The processor 501 may determine one of the public user IDs, which is associated with the index <I3>, as the selected originating public user ID <V3>.

The modified originating request message 505 may indicate a session establishment originating from a user terminal 110 associated with the selected originating public user ID <V3>.

For a terminating call, e.g. as described with respect to Fig. 4, the processor 501 is configured to: receive a terminating request message, in particular a SIP invite message, from the communication network, the terminating request message comprising a destination public user ID <L1>; retrieve profile data 135 associated with the destination public user ID <L1>, wherein the profile data 135 indicates at least one virtual public user ID <L2>; and route the terminating request message to a user terminal 310d associated with the destination public user ID <L2> and to a user terminal associated with the at least one virtual public user ID.

A user terminal 110 may be connected to the communication network as shown in Figures 2 to 4. Such a user terminal 110 can provide a multi-identity (ID) service within the communication network, in particular an IP multimedia subsystem (IMS). The user terminal 110 comprises a user interface configured to receive a user input comprising a destination public user ID <B> and a selected originating public user ID <V3>. The user terminal 110 comprises a network interface, configured to transmit an originating request message 504, in particular a SIP invite message, e.g. as shown in Fig. 5, to a communication network. The originating request message 504 comprises the destination public user ID <B>, a service ID <SI> and an index <I3> The user terminal 110 further comprises a processor running a multi-identity (ID) service application 111, configured to determine the index <I3> and the service ID <SI> based on user profile information.

The processor running the multi-identity (ID) service application 111 may receive the user profile information from the communication network. Alternatively the user profile information may be known to the user terminal 110.

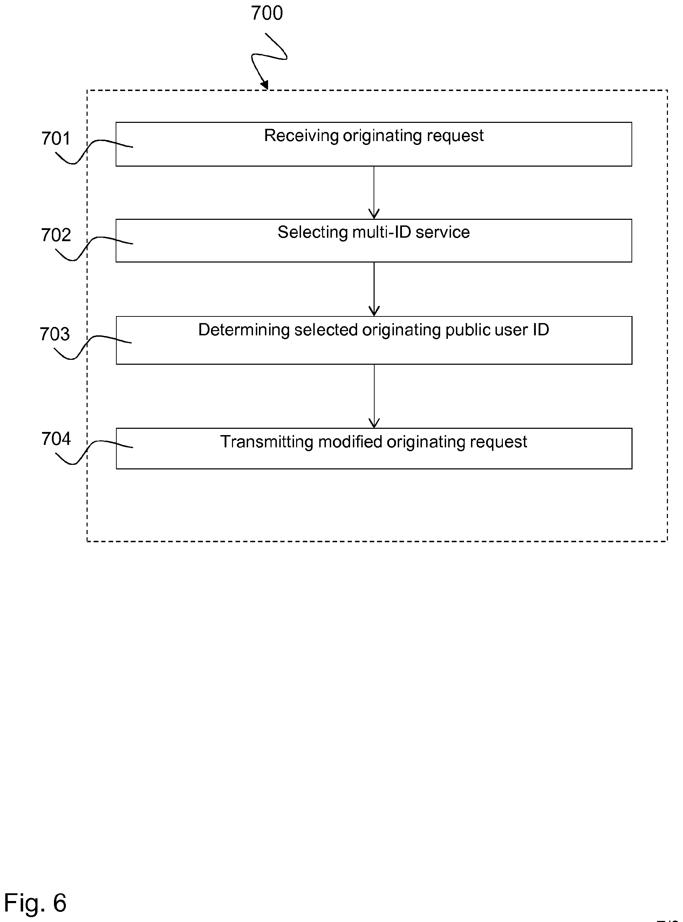

Fig. 6 shows a block diagram illustrating an exemplary method 700 for initiating an originating session for a multi-identity (ID) service within a communication network according to the disclosure. The method 700 may be applied in a communication network according to the scenario 100 as described above with respect to Figure 2.

The method 700 includes receiving 701 an originating request message, in particular a SIP invite message, from a user terminal, the originating request message comprising a destination public ID, a service ID and an index, e.g. as described above with respect to Fig. 5.

The method 700 includes selecting 702 a multi-identity service based on the service ID. The method 700 includes determining 703, based on the multi-identity service, a selected originating public user ID based on the index. The method 700 includes transmitting 704 a modified originating request message, in particular a modified SIP invite message, to the communication network, comprising the selected originating public user ID, e.g. as described above with respect to Figures 2 and 5.

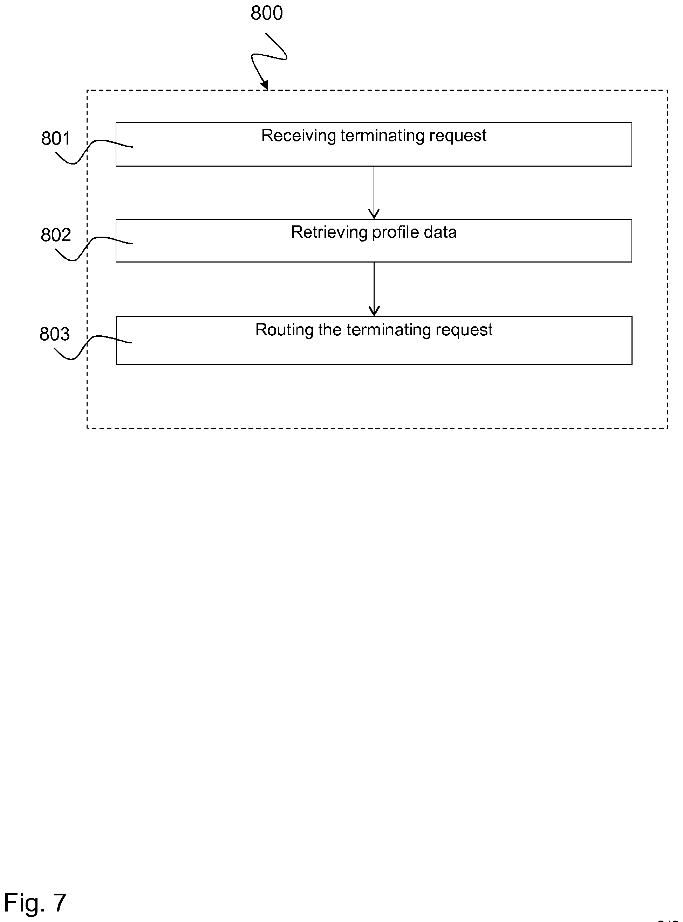

Fig. 7 shows a block diagram illustrating an exemplary method 800 for routing a terminating session for a multi-identity (ID) service within a communication network according to the disclosure. The method 800 may be applied in a communication network according to the scenario 300 as described above with respect to Figure 4.

The method 800 includes receiving 801 a terminating request message, in particular a SIP invite message, from the communication network, the terminating request message comprising a destination public user ID, e.g. as described above with respect to Figures 2 and 5.

The method 800 includes retrieving 802 profile data associated with the destination public user ID, wherein the profile data indicates at least one virtual public user ID, e.g. as described above with respect to Figures 2 and 5.

The method 800 includes routing 803 the terminating request message to a user terminal associated with the destination public user ID and to a user terminal associated with the at least one virtual public user ID, e.g. as described above with respect to Figures 2 and 5.

Another aspect of the invention is related to a computer program product comprising program code for performing the methods 700, 800 described above, when executed on a computer or a processor. The methods 700, 800 may be implemented as program code that may be stored on a non-transitory computer medium.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An application server (500) for providing a multi-identity service (141) within a communication network according to an IP multimedia subsystem, IMS, the application server (500) comprising a processor (501) which is configured to:
receive an originating request message (504) from a user terminal (110), the originating request message (504) comprising a destination public user ID, a service ID and an index,
wherein the index (51, 52) is used to assign a public user identity (27a, 28a) to an IMS subscription (3) according to an IMS data model extension (10c), wherein the extension includes public user identities (27a, 28a) that were used by another subscription, which public user identity (27a, 28a) is actually assigned to the another IMS subscription (2);
select a multi-identity service (502) based on the service ID;
determine (503), based on the multi-identity service, a selected originating public user ID based on the index; and
transmit a modified originating request message (505), in particular a modified SIP invite message, to the communication network, comprising the selected originating public user ID, wherein the index (51, 52) is determined to correspond to the selected originating public user ID in user profile data.

2. The application server (500) of claim 1,
wherein the processor (501) is configured to generate the modified originating request message (505) based on removing the service ID and the index from the originating request message (504).

3. The application server (500) of claim 1 or 2,
wherein the processor (501) is configured to generate the modified originating request message (505) based on shifting the service ID, the index and the destination public user ID to a history section of the modified originating request message (505).

4. The application server (500) of one of the preceding claims,
wherein the originating request message (504) comprises a header field, in particular a P-Asserted_identity header and/or a From header, including a native public user ID of the user terminal (110).

5. The application server (500) of claim 4,
wherein the processor (501) is configured to replace the native public user ID in the header field with the selected originating public user ID.

6. The application server (500) of one of the preceding claims,
wherein the processor (501) is configured to retrieve the selected originating public user ID from a network database (130) based on the index.

7. The application server (500) of claim 6,
wherein the processor (501) is configured to retrieve the selected originating public user ID from an extension of a user profile of the implicit registration set stored in the network database (130) without changing the implicit registration as used by the IMS network.

8. The application server (500) of claim 7,
wherein the user profile comprises at least one native public user ID of the user terminal (110) and at least one virtual public user ID of the user terminal (110).

9. The application server (500) of claim 7 or 8,
wherein an IMS subscription profile assigned to the user covers extensions to enable usage of Public-User Identities which are within implicit registration sets which are assigned to different IMS subscriptions.

10. The application server (500) of one of claims 7 to 9,
wherein an IMS subscription profile (3) assigned to a user comprises an implicit registration set (35) comprising a plurality of public user IDs (27b, 28b) and a link (4a, 4b) to multi-identity data (36) comprising the index (51, 52).

11. The application server (500) of one of the preceding claims,
wherein the modified originating request message (505) indicates a session establishment originating from a user terminal (110) associated with the selected originating public user ID.

12. The application server (500) of one of the preceding claims, wherein the processor (501) is configured to:
receive a terminating request message, in particular a SIP invite message, from the communication network, the terminating request message comprising a destination public user ID;
retrieve profile data (135) associated with the destination public user ID, wherein the profile data (135) indicates at least one virtual public user ID; and
route the terminating request message to a user terminal (310d) associated with the destination public user ID and to a user terminal associated with the at least one virtual public user ID.

13. A user terminal (110) for providing a multi-identity service within a communication network according to an IP multimedia subsystem, IMS, the user terminal (110) comprising:
a user interface configured to receive a user input comprising a destination public user ID and a selected originating public user ID; and
a network interface, configured to transmit an originating request message (504) to a communication network, wherein the originating request message (504) comprises the destination public user ID, a service ID and an index,
wherein the index (51, 52) is determined to correspond to the selected originating public user ID in user profile data, wherein the index is used to assign a public user identity (27a, 28a) to an IMS subscription (3) according to an IMS data model extension (10c), wherein the extension includes public user identities (27a, 28a) that were used by another subscription, which public user identity (27a, 28a) is actually assigned to the another IMS subscription (2); and
a processor running a multi-identity service application (111), configured to determine the index and the service ID based on user profile information.

14. The user terminal (110) of claim 13,
wherein the processor running the multi-identity service application (111) is configured to receive the user profile information from the communication network.

15. The user terminal (110) of claim 13 or 14,
wherein the network interface is configured to receive from the communication network information about a user profile extension including the index pointing to a virtual public user ID.

16. The user terminal (110) of claim 15,
wherein the processor is configured to initiate an originating call setup based on the index pointing to the virtual public user ID and/or to determine for a terminating call which virtual public user ID was originally called.

17. A method (700) for initiating an originating session for a multi-identity service within a communication network according to an IP multimedia subsystem, IMS, the method comprising:
receiving (701) an originating request message, in particular a SIP invite message, from a user terminal, the originating request message comprising a destination public ID, a service ID and an index;
wherein the index (51, 52) is used to assign a public user identity (27a, 28a) to an IMS subscription (3) according to an IMS data model extension (10c), wherein the extension includes public user identities (27a, 28a) that were used by another subscription, which public user identity (27a, 28a) is actually assigned to the another IMS subscription (2);
selecting (702) a multi-identity service based on the service ID;
determining (703), based on the multi-identity service, a selected originating public user ID based on the index; and
transmitting (704) a modified originating request message, in particular a modified SIP invite message, to the communication network, comprising the selected originating public user ID,
wherein the index (51, 52) is determined to correspond to the selected originating public user ID in user profile data.

## Patentansprüche

1. Anwendungsserver (500) zur Bereitstellung eine Multi-Identitäts-Dienst (141) innerhalb eines Kommunikationsnetzwerks gemäß einem IP-Multimedia-Subsystem, IMS, wobei der Anwendungsserver (500) einen Prozessor (501) aufweist, der konfiguriert ist:
eine Ursprungsanforderungsnachricht (504) von einem Benutzerendgerät (110) zu empfangen, wobei die Ursprungsanforderungsnachricht (504) eine öffentliche Zielbenutzer-ID, eine Dienst-ID und einen Index aufweist,
wobei der Index (51, 52) verwendet wird, einem IMS-Abonnement (3) gemäß einer IMS-Datenmodell-Erweiterung (10c) eine öffentliche Benutzeridentität (27a, 28a) zuzuweisen, wobei die Erweiterung öffentliche Benutzeridentitäten (27a, 28a) aufweist, die durch ein anderes Abonnement verwendet wurden, dessen öffentliche Benutzeridentität (27a, 28a) eigentlich einem anderen IMS-Abonnement (2) zugewiesen ist;
einen Multi-Identitäts-Dienst (502) auszuwählen, der auf der Dienst-ID beruht;
beruhend auf dem Multi-Identitäts-Dienst eine ausgewählte öffentliche Ursprungsbenutzer-ID zu bestimmen (503), die auf dem Index beruht; und
eine modifizierte Ursprungsanforderungsnachricht (505), insbesondere eine modifizierte SIP-Einladungsnachricht, an das Kommunikationsnetzwerk zu senden, die die ausgewählte öffentliche Ursprungsbenutzer-ID aufweist, wobei der Index (51, 52) so bestimmt wird, dass er der ausgewählten öffentlichen Ursprungsbenutzer-ID in Benutzerprofildaten entspricht.

2. Anwendungsserver (500) nach Anspruch 1,
wobei der Prozessor (501) konfiguriert ist, die modifizierte Ursprungsanforderungsnachricht (505) beruhend auf dem Entfernen der Dienst-ID und des Index aus der Ursprungsanforderungsnachricht (504) zu erzeugen.

3. Anwendungsserver (500) nach Anspruch 1 oder 2,
wobei der Prozessor (501) konfiguriert ist, die modifizierte Ursprungsanforderungsnachricht (505) beruhend auf dem Verschieben der Dienst-ID, des Index und der öffentlichen Zielbenutzer-ID in einen Verlaufsabschnitt der modifizierten Ursprungsanforderungsnachricht (505) zu erzeugen.

4. Anwendungsserver (500) nach einem der vorhergehenden Ansprüche,
wobei die Ursprungsanforderungsnachricht (504) ein Headerfeld, insbesondere einen P-Asserted_identity-Header und/oder einen Von-Header aufweist, der eine native öffentliche Benutzer-ID des Benutzerendgeräts (110) aufweist.

5. Anwendungsserver (500) nach Anspruch 4,
wobei der Prozessor (501) konfiguriert ist, die native öffentliche Benutzer-ID im Headerfeld durch die ausgewählte öffentliche Ursprungsbenutzer-ID zu ersetzen.

6. Anwendungsserver (500) nach einem der vorhergehenden Ansprüche,
wobei der Prozessor (501) konfiguriert ist, die ausgewählte öffentliche Ursprungsbenutzer-ID beruhend auf dem Index aus einer Netzwerkdatenbank (130) abzurufen.

7. Anwendungsserver (500) nach Anspruch 6,
wobei der Prozessor (501) konfiguriert ist, die ausgewählte öffentliche Ursprungsbenutzer-ID aus einer Erweiterung eines Benutzerprofils des impliziten Registrierungssatz abzurufen, der in der Netzwerkdatenbank (130) gespeichert ist, ohne die implizite Registrierung zu verändern, wie sie durch das IMS-Netzwerk verwendet wird.

8. Anwendungsserver (500) nach Anspruch 7,
wobei das Benutzerprofil mindestens eine native öffentliche Benutzer-ID des Benutzerendgeräts (110) und mindestens eine virtuelle öffentliche Benutzer-ID des Benutzerendgeräts (110) aufweist.

9. Anwendungsserver (500) nach Anspruch 7 oder 8,
wobei ein dem Benutzer zugewiesenes IMS-Abonnementprofil Erweiterungen abdeckt, um die Nutzung von öffentlichen Benutzeridentitäten zu ermöglichen, die sich in impliziten Registrierungssätzen befinden, die unterschiedlichen IMS-Abonnements zugewiesen sind.

10. Anwendungsserver (500) nach einem der Ansprüche 7 bis 9,
wobei ein einem Benutzer zugewiesenes IMS-Abonnementprofil (3) einen impliziten Registrierungssatz (35) aufweist, der mehrere öffentlichen Benutzer-IDs (27b, 28b) und einen Link (4a, 4b) zu Multi-Identitäts-Daten (36) aufweist, die den Index (51, 52) aufweisen.

11. Anwendungsserver (500) nach einem der vorhergehenden Ansprüche,
wobei die modifizierte Ursprungsanforderungsnachricht (505) einen Sitzungsherstellungsursprung von einem Benutzerendgerät (110) anzeigt, das mit der ausgewählten öffentlichen Ursprungsbenutzer-ID verknüpft ist.

12. Anwendungsserver (500) nach einem der vorhergehenden Ansprüche, wobei der Prozessor (501) konfiguriert ist:
eine Endanforderungsnachricht, insbesondere eine SIP-Einladungsnachricht, vom Kommunikationsnetzwerk zu empfangen, wobei die Endanforderungsnachricht eine öffentliche Zielbenutzer-ID aufweist;
Profildaten (135) abzurufen, die mit der öffentlichen Zielbenutzer-ID verknüpft sind, wobei die Profildaten (135) mindestens eine virtuelle öffentliche Benutzer-ID anzeigen; und
die abschließende Anforderungsnachricht zu einem Benutzerendgerät (310d), das mit der öffentlichen Zielbenutzer-ID verknüpft ist, und zu einem Benutzerendgerät zu leiten, das mit der mindestens einen virtuellen öffentlichen Benutzer-ID verknüpft ist.

13. Benutzerendgerät (110) zur Bereitstellung eines Multi-Identitäts-Dienstes innerhalb eines Kommunikationsnetzwerks gemäß einem IP-Multimedia-Subsystem, IMS, wobei das Benutzerendgerät (110) aufweist:
eine Benutzerschnittstelle, die konfiguriert ist, eine Benutzereingabe zu empfangen, die eine öffentliche Zielbenutzer-ID und eine ausgewählte öffentliche Ursprungsbenutzer-ID aufweist; und
eine Netzwerkschnittstelle, die konfiguriert ist, eine Ursprungsanforderungsnachricht (504) an ein Kommunikationsnetzwerk zu senden, wobei die Ursprungsanforderungsnachricht (504) die öffentliche Zielbenutzer-ID, eine Dienst-ID und einen Index aufweist,
wobei der Index (51, 52) so bestimmt wird, dass er der ausgewählten öffentlichen Ursprungsbenutzer-ID in Benutzerprofildaten entspricht, wobei der Index verwendet wird, einem IMS-Abonnement (3) gemäß einer IMS-Datenmodell-Erweiterung (10c) eine öffentliche Benutzeridentität (27a, 28a) zuzuweisen, wobei die Erweiterung öffentliche Benutzeridentitäten (27a, 28a) aufweist, die durch ein anderes Abonnement verwendet wurden, wobei die öffentliche Benutzeridentität 27a, 28a) eigentlich einem anderen IMS-Abonnement (2) zugewiesen ist; und
einen Prozessor, der eine Multi-Identitäts-Dienstanwendung (111) ausführt, die konfiguriert ist, den Index und die Dienst-ID beruhend auf Benutzerprofilinformationen zu bestimmen.

14. Benutzerendgerät (110) nach Anspruch 13,
wobei der Prozessor, der die Multi-Identitäts-Dienstanwendung (111) ausführt, konfiguriert ist, die Benutzerprofilinformationen vom Kommunikationsnetzwerk zu empfangen.

15. Benutzerendgerät (110) nach Anspruch 13 oder 14,
wobei die Netzwerkschnittstelle konfiguriert ist, vom Kommunikationsnetzwerk Informationen über eine Benutzerprofilerweiterung zu empfangen, die den Index aufweist, der auf eine virtuelle öffentliche Benutzer-ID zeigt.

16. Benutzerendgerät (110) nach Anspruch 15,
wobei der Prozessor konfiguriert ist, einen Ursprungsverbindungsaufbau einzuleiten, der auf dem Index beruht, der auf die virtuelle öffentliche Benutzer-ID zeigt, und/oder für eine Endverbindung zu bestimmen, welche virtuelle öffentliche Benutzer-ID ursprünglich angerufen wurde.

17. Verfahren (700) zum Einleiten einer Ursprungssitzung für einen Multi-Identitäts-Dienst innerhalb eines Kommunikationsnetzwerks gemäß einem IP-Multimedia-Subsystem, IMS, wobei das Verfahren aufweist:
Empfangen (701) einer Ursprungsanforderungsnachricht, insbesondere einer SIP-Einladungsnachricht, von einem Benutzerendgerät, wobei die Ursprungsanforderungsnachricht eine öffentliche Ziel-ID, eine Dienst-ID und einen Index aufweist,
wobei der Index (51, 52) verwendet wird, einem IMS-Abonnement (3) gemäß einer IMS-Datenmodell-Erweiterung (10c) eine öffentliche Benutzeridentität (27a, 28a) zuzuweisen, wobei die Erweiterung öffentliche Benutzeridentitäten (27a, 28a) aufweist, die durch ein anderes Abonnement verwendet wurden, dessen öffentliche Benutzeridentität (27a, 28a) eigentlich einem anderen IMS-Abonnement (2) zugewiesen ist;
Auswählen (702) eines Multi-Identitäts-Dienstes beruhend auf der Dienst-ID;
Bestimmen (703), beruhend auf der Multi-Identitäts-Dienst, einer ausgewählter öffentlichen Ursprungsbenutzer-ID, die auf dem Index beruht; und
Senden (704) einer modifizierten Ursprungsanforderungsnachricht, insbesondere einer modifizierten SIP-Einladungsnachricht, an das Kommunikationsnetzwerk, die die ausgewählte öffentliche Ursprungsbenutzer-ID aufweist;
wobei der Index (51, 52) so bestimmt wird, dass er der ausgewählten öffentlichen Ursprungsbenutzer-ID in Benutzerprofildaten entspricht.

## Revendications

1. Serveur d'application (500) destiné à fournir un service multi-identité (141) à l'intérieur d'un réseau de communication en fonction d'un sous-système multimédia IP, IMS, un ledit serveur d'application (500) comprenant un processeur (501) prévu pour :
recevoir un message de demande d'origine (504) d'un terminal d'utilisateur (110), ledit message de demande d'origine (504) comprenant un identifiant d'utilisateur public de destination, un identifiant de service et un indice,
l'indice (51, 52) servant à affecter une identité d'utilisateur public (27a, 28a) à un abonnement IMS (3) en fonction d'une extension de modèle de données IMS (10c), ladite extension comprenant des identités d'utilisateur public (27a, 28a) utilisées par un autre abonnement, dont l'identité d'utilisateur public (27a, 28a) est effectivement affectée à l'autre abonnement IMS (2) ;
sélectionner un service multi-identité (502) sur la base de l'identifiant de service ;
déterminer (503) sur la base du service multi-identité un identifiant d'utilisateur public d'origine sélectionné sur la base de l'indice ; et
transmettre au réseau de communication un message de demande d'origine modifié (505), en particulier un message d'invitation SIP modifié, comprenant l'identifiant d'utilisateur public d'origine sélectionné, l'indice (51, 52) étant déterminé pour correspondre à l'identifiant d'utilisateur public d'origine sélectionné dans les données de profil d'utilisateur.

2. Serveur d'application (500) selon la revendication 1,
où le processeur (501) est prévu pour générer le message de demande d'origine modifié (505) sur la base de la suppression de l'identifiant de service et de l'indice du message de demande d'origine (504).

3. Serveur d'application (500) selon la revendication 1 ou la revendication 2,
où le processeur (501) est prévu pour générer le message de demande d'origine modifié (505) sur la base du déplacement de l'identifiant de service, de l'indice et de l'identifiant d'utilisateur public de destination vers une section d'historique du message de demande d'origine modifié (505).

4. Serveur d'application (500) selon l'une des revendications précédentes,
où le message de demande d'origine (504) comprend un champ d'en-tête, en particulier un en-tête P-Asserted-Identity et/ou un en-tête From, comportant un identifiant d'utilisateur public natif du terminal d'utilisateur (110).

5. Serveur d'application (500) selon la revendication 4,
où le processeur (501) est prévu pour remplacer l'identifiant d'utilisateur public natif dans le champ d'en-tête par l'identifiant d'utilisateur public d'origine sélectionné.

6. Serveur d'application (500) selon l'une des revendications précédentes,
où le processeur (501) est prévu pour extraire l'identifiant d'utilisateur public d'origine sélectionné dans une base de données de réseau (130) sur la base de l'indice.

7. Serveur d'application (500) selon la revendication 6,
où le processeur (501) est prévu pour extraire l'identifiant d'utilisateur public d'origine sélectionné d'une extension d'un profil d'utilisateur de l'ensemble d'enregistrement implicite stocké dans la base de données de réseau (130) sans changer l'enregistrement implicite tel qu'utilisé par le réseau IMS.

8. Serveur d'application (500) selon la revendication 7,
où le profil d'utilisateur comprend au moins un identifiant d'utilisateur public natif de terminal d'utilisateur (110) et au moins un identifiant d'utilisateur public virtuel du terminal d'utilisateur (110).

9. Serveur d'application (500) selon la revendication 7 ou la revendication 8,
où un profil d'abonnement IMS affecté à l'utilisateur couvre des extensions pour permettre l'utilisation d'identités d'utilisateur public comprises dans des ensembles d'enregistrement implicite affectés à différents abonnements IMS.

10. Serveur d'application (500) selon l'une des revendications 7 à 9,
où un profil d'abonnement IMS (3) affecté à un utilisateur comprend un ensemble d'enregistrement implicite (35) comportant une pluralité d'identifiants d'utilisateur public (27b, 28b) et un lien (4a, 4b) vers des données multi-identité (36) comprenant l'indice (51, 52).

11. Serveur d'application (500) selon l'une des revendications précédentes,
où le message de demande d'origine modifié (505) indique l'établissement d'une session provenant d'un terminal d'utilisateur (110) associé à l'identifiant d'utilisateur public d'origine sélectionné.

12. Serveur d'application (500) selon l'une des revendications précédentes, où le processeur (501) est prévu pour :
recevoir un message de demande de fin, en particulier un message d'invitation SIP, du réseau de communication, ledit message de demande de fin comprenant un identifiant d'utilisateur public de destination ;
extraire des données de profil (135) associées à l'identifiant d'utilisateur public de destination, lesdites données de profil (135) indiquant au moins un identifiant d'utilisateur public virtuel ; et
adresser le message de demande de fin à un terminal d'utilisateur (310d) associé à l'identifiant d'utilisateur public de destination et à un terminal d'utilisateur associé audit au moins un identifiant d'utilisateur public virtuel.

13. Terminal d'utilisateur (110) destiné à fournir un service multi-identité à l'intérieur d'un réseau de communication en fonction d'un sous-système multimédia IP, IMS, ledit terminal d'utilisateur (110) comprenant :
une interface d'utilisateur prévue pour recevoir une entrée d'utilisateur comprenant un identifiant d'utilisateur public de destination et un identifiant d'utilisateur public d'origine sélectionné ; et
une interface de réseau prévue pour transmettre un message de demande d'origine (504) à un réseau de communication, ledit message de demande d'origine (504) comprenant l'identifiant d'utilisateur public de destination, un identifiant de service et un indice,
l'indice (51, 52) étant déterminé pour correspondre à l'identifiant d'utilisateur public d'origine sélectionné dans les données de profil d'utilisateur, l'indice servant à affecter une identité d'utilisateur public (27a, 28a) à un abonnement IMS (3) en fonction d'une extension de modèle de données IMS (10c), ladite extension comprenant des identités d'utilisateur public (27a, 28a) utilisées par un autre abonnement, dont l'identité d'utilisateur public (27a, 28a) est effectivement affectée à l'autre abonnement IMS (2) ; et
un processeur exécutant une application de service multi-identité (111), prévu pour déterminer l'indice et l'identifiant de service sur la base d'informations de profil d'utilisateur.

14. Terminal d'utilisateur (110) selon la revendication 13,
où le processeur exécutant l'application de service multi-identité (111) est prévu pour recevoir les informations de profil d'utilisateur du réseau de communication.

15. Terminal d'utilisateur (110) selon la revendication 13 ou la revendication 14,
où l'interface de réseau est prévue pour recevoir du réseau de communication des informations sur une extension de profil d'utilisateur comprenant l'indice renvoyant à un identifiant d'utilisateur public virtuel.

16. Terminal d'utilisateur (110) selon la revendication 15,
où le processeur est prévu pour établir une communication de départ sur la base de l'indice renvoyant à l'identifiant d'utilisateur public virtuel et/ou pour déterminer un appel arrivant dont l'identifiant d'utilisateur public virtuel a été appelé initialement.

17. Procédé (700) d'établissement d'une session de départ pour un service multi-identité à l'intérieur d'un réseau de communication en fonction d'un sous-système multimédia IP, IMS, ledit procédé comprenant :
la réception (701) d'un message de demande d'origine, en particulier d'un message d'invitation SIP d'un terminal d'utilisateur, le message de demande d'origine comprenant un identifiant d'utilisateur public de destination, un identifiant de service et un indice,
l'indice (51, 52) servant à affecter une identité d'utilisateur public (27a, 28a) à un abonnement IMS (3) en fonction d'une extension de modèle de données IMS (10c), ladite extension comprenant des identités d'utilisateur public (27a, 28a) utilisées par un autre abonnement, dont l'identité d'utilisateur public (27a, 28a) est effectivement affectée à l'autre abonnement IMS (2) ;
la sélection (702) d'un service multi-identité sur la base de l'identifiant de service ;
la détermination (703) sur la base du service multi-identité d'un identifiant d'utilisateur public d'origine sélectionné sur la base de l'indice ; et
la transmission (704) au réseau de communication d'un message de demande d'origine modifié, en particulier d'un message d'invitation SIP modifié, comprenant l'identifiant d'utilisateur public d'origine sélectionné.
l'indice (51, 52) étant déterminé pour correspondre à l'identifiant d'utilisateur public d'origine sélectionné dans les données de profil d'utilisateur.
